**Europäisches Patentamt**

**European Patent Office**

**Office européen des brevets**

(11) Veröffentlichungsnummer: **0 070 974**
**B1**

## EUROPÄISCHE PATENTSCHRIFT

(45) Veröffentlichungstag der Patentschrift:
17.04.85

(21) Anmeldenummer: 82103758.7

(22) Anmeldetag: 03.05.82

(51) Int. Cl.⁴: **G 01 B 15/02**, G 01 N 23/223, G 01 N 23/20

(54) Verfahren und Vorrichtung zur zerstörungsfreien Bestimmung der Dicke der Eisen-Zinn-Zwischenschicht an elektrolytisch verzinntem Blech.

(30) Priorität: 23.07.81 DE 3129049

(43) Veröffentlichungstag der Anmeldung:
09.02.83 Patentblatt 83/6

(45) Bekanntmachung des Hinweises auf die Patenterteilung:
17.04.85 Patentblatt 85/16

(84) Benannte Vertragsstaaten:
AT BE DE FR GB IT NL

(56) Entgegenhaltungen:
DE - A - 2 549 735
DE - A - 2 721 589
US - A - 4 129 778

(73) Patentinhaber: Hoesch Aktiengesellschaft,
Eberhardstrasse 12, D-4600 Dortmund 1 (DE)

(72) Erfinder: Kopineck, Hermann Josef Prof. Dr. rer. nat.,
Wildbannweg 36, D-4600 Dortmund 50 (DE)
Erfinder: Böttcher, Wolfgang Dr. Dipl.-Phys., Auf dem
Hilf 35, D-5840 Schwerte 4 (DE)
Erfinder: Maurer, Albrecht, Dipl.-Phys., Geleitstrasse 12,
D-4600 Dortmund 12 (DE)

## Beschreibung

Die Erfindung betrifft ein Verfahren und eine Vorrichtung zur zerstörungsfreien Bestimmung der Dicke der Eisen-Zinn-Zwischenschicht an elektrolytisch verzinntem Blech aus Stahl mit Hilfe einer Röntgen- oder Gamma-Strahlung, wobei die aus dem Blech austretende Strahlung an der gleichen Seite des Bleches, an der auch eingestrahlt wird, gemessen wird.

Ein solches Verfahren wird zur Überwachung der laufenden Produktion deshalb benötigt, weil eine zu dünne Eisen-Zinn-Zwischenschicht die Haftung des Zinns auf dem Eisengrundmaterial verschlechtert und eine zu dicke Eisen-Zinn-Zwischenschicht aus Gründen des Korrosionsschutzes vermieden werden muß.

Die vorliegende Erfindung baut auf zwei bekannte Verfahren auf. Das eine Verfahren ist zur Bestimmung der Zinnschicht unter dem Namen Röntgenfluoreszenzmessung bekannt, bei dem aus der Schwächung der im Eisen erzeugten sekundären Strahlung die Dicke der Zinnschicht ermittelt wird.

Das zweite Verfahren ist unter dem Namen Röntgenbeugungsmessung bekannt. Bei diesem Verfahren wird bei schräger Einstrahlung ein in der Eisen-Zinn-Zwischenschicht gebeugter Röntgenstrahl an der gleichen Seite des Bleches, an der eingestrahlt wird, wieder gemessen.

Die Intensität des austretenden gebeugten Strahles hängt von der Dicke der Eisen-Zinn-Zwischenschicht ab. Leider besteht auch eine weitere Abhängigkeit von der Dicke der Zinnschicht, so daß diese mit berücksichtigt werden muß. Die Dicke der Zinnschicht ist innerhalb eines Blechbandes Schwankungen unterworfen. Deshalb muß für eine genaue Messung der Eisen-Zinn-Zwischenschicht zuerst an einer Stelle des Bleches die Dicke der Zinnschicht gemessen werden, anschließend muß zur Bestimmung der Eisen-Zinn-Zwischenschicht ein durch die Zwischenschicht an genau der gleichen Stelle gebeugter Stahl gemessen werden. Eine Verknüpfung beider Meßergebnisse würde zu einer Bestimmung der Dicke der Eisen-Zinn-Zwischenschicht führen.

Die beiden Messungen waren bisher nur mit zwei getrennten Meßeinrichtungen möglich, was zu dem Nachteil führt, daß bei sich bewegendem Blech, das z. B. zu einem Coil aufgewickelt wird, durch die beiden Meßeinrichtungen nicht genau die gleiche Stelle des Bleches durch die Strahlen getroffen und gemessen wird, was zu Ungenauigkeiten führt. Außerdem ist es oft schwierig, aus Platzgründen zwei automatische Meßeinrichtungen zur Überwachung der Produktion zu installieren.

Der Erfindung liegt die Aufgabe zugrunde, die Messungen zu vereinfachen, die Meßergebnisse besonders an sich bewegenden Blechen genauer zu machen und die Meßergebnisse schneller anzuzeigen.

Diese Aufgabe wird mit einer Röntgen- oder Gamma-Strahlung gelöst, die an einer Seite des Bleches eingestrahlt wird und deren Reaktionen an der gleichen Blechseite gemessen werden dadurch, daß diese Strahlung eine Energie hat, die höher als 7,111 keV liegt und deren Größe konstant ist und mit einem Winkel gemessen wird, der zwischen 6° bis 20° für den einfallenden und den an der gleichen Blechseite wieder austretenden Strahl liegt, wobei der Winkel zwischen dem Strahl und der Blechoberfläche oder bei gekrümmten Blechoberflächen zwischen der Tangente und dem Strahl liegt, und außerdem gleichzeitig in energiedispersiver Weise aus der Fluoreszenzstrahlung des Eisens und aus einem oder mehreren der anderen Energiebereiche des gebeugten Strahles die Meßwerte gewonnen werden, wobei die Meßwerte aus der Fluoreszenzstrahlung der Dicke der Zinnschicht zugeordnet werden und aus den anderen Meßwerten unter Berücksichtigung der Werte für die Dicke der Zinnschicht die Werte der Eisen-Zinn-Zwischenschicht gewonnen werden.

Diese Berücksichtigung der Werte der Zinnschicht geschieht mit Hilfe von Berechnungsfaktoren, die mit Hilfe von Proben mit bekannter Zinnauflage und bekannter Zwischenschicht gewonnen werden.

Diese Proben können auch in der Vorrichtung verbleiben und zum automatischen Eichen der gesamten Vorrichtung benutzt werden.

Ein solches Verfahren ist besonders günstig mit einer Feinstrukturröhre mit Silber-Anode als Strahlungsquelle auszuführen. Diese Feinstrukturröhre wird mit mindestens 25 kV/25 mA angeregt, und es ist der Strahl auf die Blechoberfläche bzw. bei gekrümmten Oberflächen zur Tangente unter einem Winkel zwischen 6° bis 20° gerichtet, und es ist ein Empfänger auf den gebeugten Strahl ausgerichtet und der Empfänger besteht aus einem Halbleiter-Strahlungsdetektor, an den ein Impulshöhenanalysator, ein Rechner und ein Anzeigegerät angeschlossen sind.

Die in dem Verfahren miteinander kombinierten, für sich allein an sich bekannten Messungen der Dicke der Zinnschicht und der Dicke der Eisen-Zinn-Zwischenschicht basieren auf folgenden Grundlagen:

Bei der Röntgenfluoreszenzmessung wird im Eisengrundmaterial mit einer primären Röntgenstrahlung eine sekundäre Fe-K-Strahlung angeregt und diese wird beim Durchgang durch die Sn-Deckschicht geschwächt. Der Betrag der Schwächung ist ein Maß für die Schichtdicke. Der mathematische Zusammenhang lautet:

$$I(d)_{Sn} = I_0 e^{-\mu d} \qquad (1)$$

$I(d)$ = gemessene Intensität  
$I_0$ = eingestrahlte Intensität  
$\mu$ = Absorptionskoeffizient  
$d$ = Dicke der Sn-Schicht

Die Zwischenschichtbestimmung nach der Röntgenbeugungsmessung mit dem Röntgenfeinstrukturverfahren erfolgt nach dem Braggschen Gesetz $n \cdot \lambda = 2^b \sin \Theta$.

n = Beugungsordnung
$\lambda$ = Wellenlänge
b = Gitterkonstante
$\Theta$ = Beugungswinkel

Die nach dieser Erfindung angewandte energiedispersive Aufnahmetechnik strahlt weißes Röntgenlicht, das heißt variables $\lambda$ ein. Die Beugungssignale erscheinen dann als Peaks bei diskreten Wellenlängen bzw. Energien (Energiespektrum). Diese Methode ist vorteilhaft, weil sie, verglichen mit anderen Techniken, ohne bewegte Teile auskommt und eine Messung in relativ kurzer Zeit gestattet. Darüber hinaus wird mit dieser Methode die Intensität von charakteristischen Fluoreszenzlinien, wie z. B. $FeK_\alpha$, zur Berücksichtigung des Einflusses der Dicke der Zinnschicht mitbestimmt.

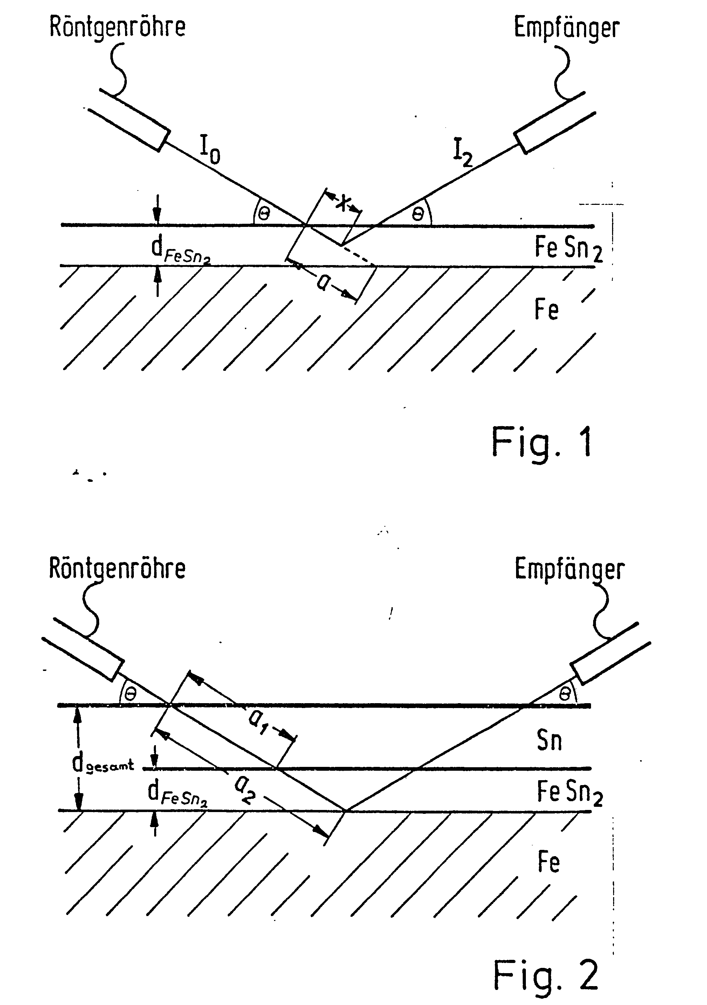

Die Herleitung der Zwischenschichtdicke aus der Intensität der Beugungslinien erfolgt zunächst für eine freiliegende Zwischenschicht, wobei auf Bezeichnungen der Fig. 1 und 2 Bezug genommen wird.

Bei Eintritt in die FeSn$_2$-Schicht entsprechend Fig. 1 wird die primäre Strahlung nach dem Absorptionsgesetz geschwächt:

$$dI_1 = I_0 e^{-\mu x} dx \qquad (2)$$

An der Stelle dx wird der Anteil D der auftreffenden Intensität gebeugt. Dieses D ist wegen der Isotropie von FeSn$_2$ konstant.

Beim Austritt der gebeugten Strahlung aus der FeSn$_2$-Schicht gilt wieder das Absorptionsgesetz, so daß beim Austritt aus der Oberfläche folgende Intensität $dI_2(x)$ gemesen wird:

$$dI_2 = dI_1 De^{-\mu x} dx \qquad (3)$$
$$= I_0 De^{-2\mu x} dx$$

$$I_2 = \int_0^a I_0 De^{-2\mu x} dx \qquad (4)$$

$$\left( a = \frac{d}{\sin \Theta} \right)$$

$$= \frac{I_0}{2\mu} (e^{-2\mu a} - 1) \qquad (5)$$

(d = Dicke der Zwischenschicht)

Falls die FeSn$_2$-Schicht durch eine Rein-Sn-Schicht, wie in Fig. 2 dargestellt, überdeckt wird, ändern sich die Integrationsgrenzen. Analog zu (4) lautet dann die Beziehung für die Intensität:

$$I_2 = \int_{a_1}^{a_2} I_0 De^{-2\mu x} dx \qquad (6)$$

$$I_2 = \frac{DI_0}{2\mu} (e^{-2\mu a_2} - e^{-2\mu a_1}) \qquad (7)$$

Nach $a_1$ aufgelöst erhält man

$$a_1 = \frac{1}{2\mu} \ln \left( \frac{I_2}{I_0} \frac{2\mu}{D} + e^{-2\mu a_2} \right) \qquad (8)$$

Die Dicke der Zwischenschicht ist

$$d_{FeSn_2} = (a_2 - a_1) \sin \Theta$$

Zur Bestimmung von $d_{FeSn_2}$ muß die Dicke d gesamt $a_2 \cdot \sin \Theta$ der Gesamtauflage bekannt sein. Sie errechnet sich aus der Intensität I der Fe-K-Linien (s. Formel (1))

$$d_{gesamt} = -\frac{1}{\mu} \ln \frac{I}{I_0} Sn \qquad (9)$$

In der Praxis läßt sich $I_0$ für Gl. (8) und (9) und D für Gl. (8) nur sehr ungenau bestimmen. Man umgeht dieses Problem in dem Verfahren nach der Erfindung durch Kalibriermessungen. Umstellung von Gl. (8) ergibt für $a_1 = 0$.

$$I_2 = \frac{DI_0}{2\mu} (1 - e^{-2\mu a_2})$$
$$\qquad (10)$$
$$DI_0 = \frac{I_2 - 2\mu}{1 - e^{-2\mu a_2}}$$

(Der lineare Absorptionskoeffizient $\mu$ für Zinn kann einem Tabellenwerk entnommen werden.) Durch Analyse von Proben mit abgelöster Rein-Sn-Schicht und bekannter Zwischenschichtdicke erhält man $I_2$ und kann damit $DI_0$ bestimmen.

In Gleichung (1) wird $I_0$ dadurch gewonnen, daß man Eichproben mit vorher bestimmter Zinnauflage analysiert. Mit mindestens zwei Proben läßt sich $I_0$ bestimmen.

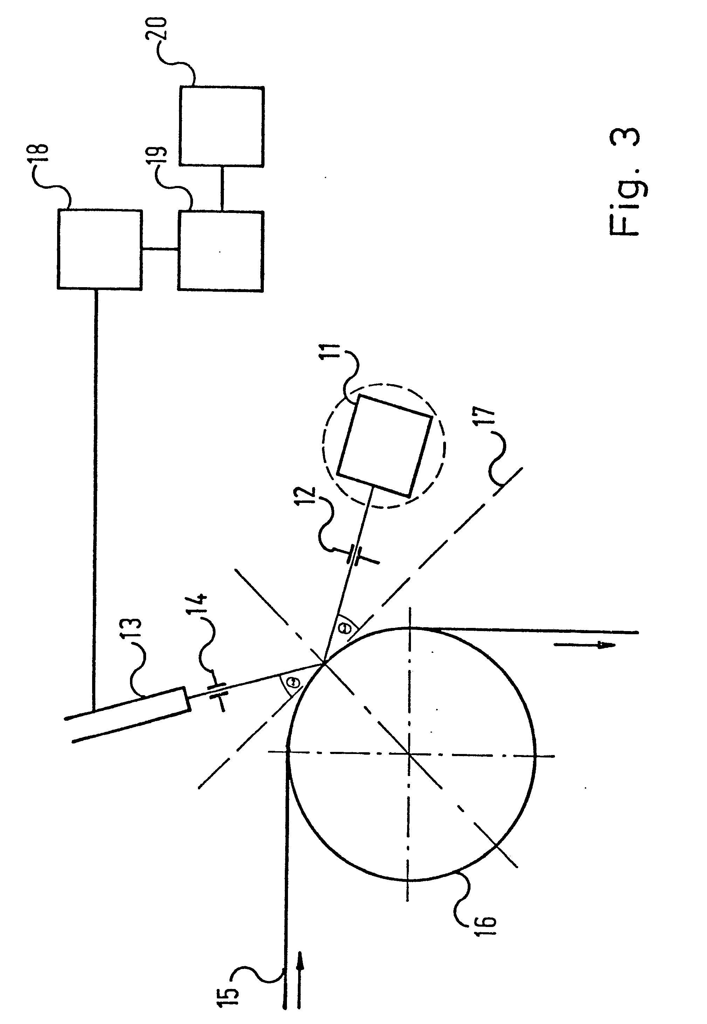

Die Vorrichtung ist in Fig. 3 dargestellt. Sie besteht aus einer $_{Ag}$-Feinstrukturröhre 11 als Strahlungsquelle mit vorgebauter Blende 12. Der Strahlungsempfänger 13 besteht aus einem Halbleiterdetektor mit Reinst-Germanium-Analysatorkristall vor dem ebenfalls eine Blende 14 sitzt. Diese Bauteile sind in einer Produktionslinie für Weißblech 15 so angeordnet, daß der Meßfleck auf einer Bandumlenkrolle 15 liegt. Zu einer gedachten Tangente 17 an die Bandumlenkrolle 16 sind Röntgenröhre 11 und Strahlungsempfänger 13 unter einem Winkel $\Theta$, der zwischen $6^c$ bis $20°$ liegt und in einem günstigen Fall etwa $16°$ beträgt, angeordnet. Der Strahlungsempfänger 13 zählt die empfangenden Impulse von vorgegebenen Energiefenstern in festen vorherbestimmten Zeitabständen. Das Energiefenster für das FeSn$_2$-Beugungssignal liegt nach der Bragg-

Gleichung ($\theta = 16°$, b = 2,57 ÅE) bei 8,75 KeV. Seine Öffnungsbreite richtet sich nach der Auflösung des Detektors. Sie wird so eingestellt, daß die gesamte Häufigkeitsverteilung (Peak) gemessen wird.

Das Energiefenster für die Fluoreszenzmessung wird um die Fe-K-Linien des Eisens gelegt (FeK$\alpha$ = 6,4 KeV, FeK$\beta$ = 7,05 KeV).

Die Meßzeit wird so gewählt, daß die statistische Unsicherheit der gewählten Impulse in den Energiefenstern gering wird, vorzugsweise 100 Sekunden. Während der Messung kann das produzierte Weißblech 15 an der Meßanlage vorbeilaufen. Die Meßwerte, die aus den Impulsen von den beschriebenen Energiefenstern nach Gl. (8) bzw. (9) durch den angeschlossenen Rechner berechnet werden, sind dann Durchschnittswerte aus dem Weißblechband 15, das während der Messung die Meßanlage passiert hat.

Die Meßwerte werden in einem an den Strahlungsempfänger 13 angeschlossenen Impulshöhenanalysator 18 in für die Zinnschicht und in für die Eisen-Zinn-Zwischenschicht maßgebende Meßwerte unterteilt. An den Impulshöhenanalysator 18 ist ein Kleinrechner 19 angeschlossen, in dem die Dicke der Eisen-Zinn-Zwischenschicht unter Berücksichtigung der Dicke der Zinnschicht errechnet wird. Die Ergebnisse werden auf dem Bildschirm des Anzeigegerätes 20 dargestellt.

**Patentansprüche**

1. Verfahren zur zerstörungsfreien Bestimmung der Dicke der Eisen-Zinn-Zwischenschicht an elektrolytisch verzinntem Blech aus Stahl mit Hilfe einer Röntgen- oder Gamma-Strahlung, wobei die aus dem Blech austretende Strahlung an der gleichen Seite des Bleches, an der auch eingestrahlt wird, gemessen wird, dadurch gekennzeichnet, daß beim Messen für die einfallende Strahlung eine Energie genommen wird, die höher als 7,111 keV liegt und deren Größe konstant ist und mit einem Winkel gemessen wird, der zwischen 6° bis 20° für den einfallenden und den an der gleichen Blechseite wieder austretenden Strahl liegt, wobei der Winkel zwischen dem Strahl und der Blechoberfläche oder bei gekrümmten Blechoberflächen zwischen der Tangente und dem Strahl liegt, und außerdem gleichzeitig in energiedispersiver Weise aus der Fluoreszenzstrahlung des Eisens und aus einem oder mehreren der anderen Energiebereiche des gebeugten Strahles die Meßwerte genommen werden, wobei die Meßwerte aus der Fluoreszenzstrahlung der Dicke der Zinnschicht zugeordnet werden und aus den anderen Meßwerten unter Berücksichtigung der Werte für die Dicke der Zinnschicht die Werte der Eisen-Zinn-Zwischenschicht errechnet werden.

2. Verfahren nach Anspruch 1, dadurch gekennzeichnet, daß die Berücksichtigung der Werte der Zinnschicht mit Hilfe von Berechnungsfaktoren geschieht, die mit Hilfe von Proben mit bekannter Zinnauflage und bekannter Zwischenschicht gewonnen werden.

3. Vorrichtung zur Durchführung des Verfahrens nach einem der Ansprüche 1 oder 2, dadurch gekennzeichnet, daß als Strahlungsquelle eine Feinstrukturröhre (11) mit Silber-Anode verwendet wird, die mit mindestens 25 kV/25 mA angeregt wird, deren Strahl zur Blechoberfläche bzw. bei gekrümmten Oberflächen zur Tangente (17) unter einem Winkel zwischen 6° bis 20° gerichtet ist, wobei ein Empfänger (13) auf den gebeugten, an der gleichen Blechseite wieder austretenden Strahl ausgerichtet ist und der Empfänger (13) ein Halbleiter-Strahlungsdetektor ist, an den ein Impulshöhenanalysator (18), ein Rechner (19) und ein Anzeigegerät (20) angeschlossen sind.

**Claims**

1. Method for the non-destructive determination of the thickness of the iron-tin intermediate layer on electrolytically-tinned sheet steel by means of X-ray or gamma-ray radiation, wherein the radiation issuing from the sheet is measured on the same side of the sheet as the one which is irradiated, characterized in that, in the measurement, an energy is selected for the incident radiation which is higher than 7.111 keV which has a constant magnitude and the measuring is effected at an angle which lies between 6° to 20° for the incident beam and for the beam issuing at the same side of the sheet, wherein the angle lies between the beam and the sheet surface or, with a curved surface, between the tangent and the beam, and moreover the measured values are taken simultaneously in the energydispersive mode from the fluorescence radiation of the iron and from one or more of the other enery regions of the diffracted beam, so that the measured values of the fluorescence radiation are representative of the thickness of the tin layer and the values of the iron-tin intermediate layer are comupted from the other measured values with reference to the values for the thickness of the tin layer.

2. Method according to claim 1, characterized in that reference of the values of the tin layer is effected with the aid of computation factors which are obtained by means of probes with a known tin coating and a known intermediate layer.

3. Apparatus for carrying out the method according to claim 1 or 2, characterized in that a fine-structured tube (11) with a silver anode is used as the radiation source, which is energised with at least 25 kV/25 mA, the beam from which is directed to the sheet surface or, with a curved surface, to the tangent (17) at an angle between 6° to 20°, wherein a receiver (13) is directed toward the diffracted beam issuing from the same side of the sheet and the receiver (13) is a semiconductor radiation detector to which a pulse-height analyser (18), a computer (19) and an indicating device (20) are connected.

**Revendications**

1. Procédé pour la détermination non destructive de l'épaisseur de la couche intermédiaire fer/étain sur une tôle d'acier étaminée par voie électrolytique à l'aide de rayons X ou de rayons gamma, dans lequel le rayonnement sortant de la tôle est mesuré du même côté de celle-ci que celui qui est irradié, caractérisé en ce que, lors de la mesure on choisist, pour les rayons incidents, une énergie qui est supérieure à 7,111 keV et dont la valeur est constante, et en ce que la mesure s'effectue sous un angle compris entre 6 et 20° pour le rayon incident et pour le rayon sortant du même côté de la tôle, cet angle étant compris entre le rayon et la surface de la tôle ou, dans le cas de tôles ayant des surfaces courbes, entre la tangente et le rayon et, en ce qu'en outre on prend simultanément, en mode de dispersion d'énergie, les valeurs du rayonnement fluorescent du fer et d'un ou plusieurs des autres domaines d'énergie du rayon diffracté, les valeurs de mesure résultant du rayonnement par fluorescence étant attribuées à l'épaisseur de la couche d'étain tandis que, d'après les autres valeurs de mesure et compte tenu des valeurs pour l'épaisseur de la couche d'étain, on calcule les valeurs de la couche intermédiaire de fer/étain.

2. Procédé suivant la revendication 1, caractérisé en ce qu'on tient compte des valeurs de la couche d'étain à l'aide de facteurs de calcul que l'on obtient à l'aide d'échantillons comportant un revêtement d'étain connu et une couche intermédiaire connue.

3. Dispositif pour la mise en oeuvre du procédé suivant l'une des revendications 1 et 2, caractérisé en ce que, comme source de rayonnement, on utilise un tube à structure fine (11) comportant une anode en argent qui est excitée par au moins 25 kV/25 mA dont le rayon est dirigé vers la surface de la tôle ou, dans le cas de surfaces courbes, vers la tangente (17) sous un angle compris entre 6 et 20°, un récepteur (13) étant orienté vers le rayon diffracté sortant à nouveau du même côté de la tôle, ce récepteur (13) étant un détecteur de rayonnement à semi-conducteur auquel sont raccordés un analyseur de hauteur d'impulsion (18), un calculateur (19) et un appareil indicateur (20).

Fig. 1

Fig. 2

Fig. 3

0 070 974